# EUROPÄISCHE PATENTSCHRIFT

(11) **EP 3 967 906 B1**
(45) Veröffentlichungstag und Bekanntmachung des Hinweises auf die Patenterteilung: **19.11.2025**
(21) Anmeldenummer: 21188144.6
(22) Anmeldetag: 28.07.2021
(51) Int. Cl.: F16K 7/12, B29C 73/16, B29C 73/22, F16K 37/00

(54) **MEMBRANANORDNUNG MIT SELBSTHEILENDEN EIGENSCHAFTEN**
MEMBRANE ASSEMBLY WITH SELF-HEALING PROPERTIES
AGENCEMENT DE MEMBRANE À DES PROPRIÉTÉS D'AUTO-GUÉRISON

(30) Priorität: 11.09.2020 DE 102020123686
(43) Veröffentlichungstag der Anmeldung: 16.03.2022
(73) Patentinhaber: SISTO Armaturen S.A., 6468 Echternach (LU)
(72) Erfinder: BRITZ, Robert, 6468 Echternach (LU)
(74) Vertreter: Busch, Tobias

(56) Entgegenhaltungen:
- EP-A1- 3 323 583
- EP-A2- 2 505 719
- WO-A1-2018/204826
- WO-A2-2004/082813
- DE-A1- 102011 000 410
- US-A- 2 387 433
- US-A1- 2009 115 142
- US-A1- 2011 023 611

## Beschreibung

Die Erfindung betrifft ein Membranventil mit einer Membran, die Räume voneinander dichtend trennt und die Membran mithilfe von Schrauben zwischen einem Gehäuseunterteil und einem Gehäuseoberteil des Membranventils eingespannt ist.

Solche Membranen werden beispielsweise in Membranventilen, Membranantrieben oder Membranpumpen eingesetzt. Bei Membranventilen dichtet die Membran das Ventil vorzugsweise auf einem Dichtsteg ab. Ein solches Membranventil wird beispielsweise in der DE 195 05 747 A1 beschrieben. Bei einer Membranpumpe wird das zu fördernde Fluid durch die Membran vom Antrieb getrennt. Membranantriebe kommen beispielsweise in Form pneumatischer Antriebe beispielsweise bei Stellarmaturen zum Einsatz. Dabei wird eine vorzugsweise mit einer Spindel gekoppelte Membran über Druckluft bewegt.

Membranventile können zur Dosierung von unterschiedlichen Fluiden eingesetzt werden, beispielsweise von Gasen, Dämpfen oder Flüssigkeiten. Beispielgebend können Membranventile eingesetzt werden, um hochviskose bzw. sehr stark haftfähige Fluide zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Fluids ermöglicht wird.

Dies ist insbesondere bei pharmazeutischen Anlagen und Fertigungsprozessen von großer Bedeutung, da diese den hohen Ansprüchen einer strengen Validierung unterliegen, mit dem Ziel, eine gleichbleibende und reproduzierbare Qualität zu gewährleisten. Aus diesen Ansprüchen resultiert die Notwendigkeit, verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Die eingesetzten Membranen bilden bewegliche, dichtende Wände, die zwei Räume mit in der Regel unterschiedlichen Fluiden (Gase, Flüssigkeiten) und häufig auch unterschiedlichen Druckverhältnissen voneinander trennen.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch angetrieben bedingt sein kann. Weiterhin ist die Beständigkeit der Membran von Bedeutung, insbesondere wenn aggressive Medien gefördert werden.

Die Bewegungsfähigkeit und Beständigkeit einer Membran hängen im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

Bei dynamisch belasteten Membranen kann es zu einer Rissbildung an der Oberfläche einer Membranlage kommen, da dort die dynamische Wechselbelastung am höchsten ist. Ein solcher Riss in der Membranoberfläche kann diverse negative Folgen haben. Bei sterilen Anwendungen kann in einen solchen Riss eingedrungenes Fluid nicht oder nur schwer gereinigt werden. Ein Reinigungs- oder Sterilisationsfluid kann evtl. diese Bereiche nicht erreichen, was zu einer dauerhaften Verkeimung in einem sterilen Prozess führen kann.

Die dynamische Belastung im Betrieb der Membran kann dazu führen, dass sich ein initialer Riss in der Membranoberfläche weiter ausbildet und unter Umständen zu einem vollkommenen Brechen der Membran führt. Dabei kann Förderfluid austreten, das abhängig von der Art des Fluids zu einer Gefährdung der Gesundheit von Menschen sowie zu einer Belastung der Umwelt führen kann.

In der US000006138550 ist eine unverstärkte Membran für Membranpumpen mit einer oberflächlichen PTFE-Beschichtung beschrieben. Die Beschichtung soll beim Reißen der Membran eine Selbstheilung bewirken.

Die WO 2018/204826 A1 offenbart ein Festkörperventil, das einen Ventilkörper mit einer Öffnung für den Durchgang von Hochdruckfluid, eine über der Öffnung angeordnete Membran, um das Hochdruckfluid im Ventilkörper zurückzuhalten, und einen Draht auf der Membran umfasst, wobei das Anlegen von Elektrizität an den Draht ein selektives Versagen der Membran bewirkt, was zu einer schnellen Freisetzung einer großen Menge von unter Druck stehendem Fluid durch den Ventilkörper und die Membran führt.

In der US 2009/0115142 A1 wird eine Stiefelanordnung für ein Gelenk bereitgestellt, die eine innere Schicht und eine äußerste Schicht umfasst. Die innere Schicht besteht aus einem ersten Material, und die äußerste Schicht besteht aus einem zweiten Material, das sich vom ersten Material unterscheidet. Die äußere Schicht bedeckt zumindest teilweise die innere Schicht, und das zweite Material umfasst ein selbstreparierendes Polymer.

Die DE 10 2011 000 410 A1 beschreibt einen Artikel aus einem verschleißanfälligen Werkstoff, der nach einer ersten Werkstoffvariante ausschließlich aus einem polymeren Werkstoff mit elastischen Eigenschaften besteht oder nach einer zweiten Werkstoffvariante ein Verbundwerkstoff ist, gebildet aus einem polymeren Werkstoff mit elastischen Eigenschaften im Verbund mit einem textilen Werkstoff und/ oder einem thermoplastischen Kunststoff und/oder einem anorganischen Werkstoff, wobei sich der erfindungsgemäße Artikel dadurch auszeichnet, dass in dem Werkstoff ein System von Kapseln eingearbeitet ist, umfasend eine erste Gruppe von Kapseln, enthaltend eine Substanz oder ein Substanzgemisch mit pflegenden Eigenschaften; eine zweite Gruppe von Kapseln, enthaltend eine Substanz oder ein Substanzgemisch mit selbstheilenden Eigenschaften und eine dritte Gruppe von Kapseln, enthaltend eine Substanz oder ein Substanzgemisch, die/das einen bevorstehenden Artikelausfall meldet; wobei nach dem Aufbrechen der Kapseln der ersten, zweiten und dritten Gruppe die jeweilige Substanzwirkung eintritt. Das System von Kapseln kommt insbesondere bei einem Luftfederbalg mit einer Innenschicht, Außenschicht und einer eingebetteten Festigkeitsträgerschicht zum Einsatz.

Die US 2 387 433 A offenbart ein Ventil für aufblasbare Gegenstände, mit einem Stiel aus Gummi oder ähnlichem Material, der einen Hohlraum und an einem Ende eine Öffnung aufweist, die aus dem Gegenstand herausragt, einem selbstdichtenden Stopfen, der in dem Hohlraum des Stiels aufgenommen ist, einer Verschlußkappe (5), die in die Öffnung passt, um den Stopfen in dem Stiel zu halten, und einer verbindenden Nut- und Federeinrichtung an dem Stiel und der Kappe, um die Kappe wieder lösbar in der Öffnung zu befestigen.

Die US 2011/0023611 A1 beschreibt ein selbstheilendes Verbundmaterial, das eine faserverstärkte Polymermatrix umfasst, wobei die Polymermatrix ein wärmehärtendes Polymer und ein thermoplastisches Polymer umfasst.

Die EP 2 505 719 A2 offenbart Geokompositartikel, die eine Barriere gegen Wasser mit hoher Leitfähigkeit, z. B. Meerwasser, bilden können, sowie deren Herstellungsverfahren, um Oberflächen, die mit Wasser mit hoher Leitfähigkeit in Kontakt kommen, wasserdicht zu machen. Die Matte des Geokompositartikels besteht aus einer gewebten oder nicht gewebten Geotextilbahn oder -matte, die über ihre gesamte(n) Hauptoberfläche(n) ein pulverförmiges oder körniges, teilweise vernetztes Acrylamid/Acrylat/Acrylsäure-Copolymer enthält. Das pulver- oder granulatförmige Copolymer hat einen unerwartet hohen freien Quellwert, wenn es mit Wasser hoher Leitfähigkeit, wie z. B. Meerwasser, hydratisiert wird. Eine flüssigkeitsundurchlässige Abdeckfolie wird auf die oberen Hauptoberflächen des gefüllten, copolymertragenden Geotextils geklebt, um eine primäre Wassersperrschicht mit hoher Leitfähigkeit zu bilden, die, falls sie reißt, durch die Quellung einer darunter liegenden Schicht aus wasserunlöslichem, teilweise vernetztem Acrylamid/Acrylsäure-Copolymer versiegelt wird.

Die EP 3 323 583 A1 offenbart ein Membranventil gemäß dem Oberbegriff von Anspruch 1. Aufgabe der Erfindung ist es, eine Membrananordnung mit einer Membran bereitzustellen, die plötzlich auftretende Risse selbst abdichtet. Darüber hinaus soll die Membran den Anforderungen des Betriebs gerecht werden und dabei äußerst langlebige Eigenschaften bewahren. Des Weiteren soll die Abdichtung eines Risses festgestellt werden können, ohne die Membrananordnung außer Betrieb zu nehmen. Die Membran soll sich auf möglichst preiswerte sowie besonders einfache Weise und mit einem möglichst geringen Materialausschuss herstellen lassen.

Diese Aufgabe wird erfindungsgemäß durch ein Membranventil gemäß den Merkmalen des Anspruchs 1 gelöst. Bevorzugte Varianten sind den Unteransprüchen, der Beschreibung und den Figuren zu entnehmen. Erfindungsgemäß ist ein Medium zur Abdichtung von Rissen innerhalb der

Membran des Membranventils angeordnet, wobei das Medium beim Auftreten eines Membranschadens in Form eines Membranrisses beim Kontakt mit einem Förderfluid eine Reaktivität zum Verschließen des Membranrisses ausführt.

Vorteilhafterweise ist das Medium zähflüssig und/oder pastös innerhalb der Membran angeordnet. Bevorzugt ist das Medium zwischen zwei Lagen der Membran eingeschlossen. In einer alternativen Variante kann das Medium auch gasförmig und/oder als Feststoff ausgebildet sein.

Gemäß der Erfindung ist das Medium chemisch reaktiv, vorzugsweise selektiv chemisch reaktiv. Das bedeutet, dass das Medium über die mitunter lange dynamische Belastung der Membran innerhalb der Membran eingeschlossen ist und erst beim Auftreten eines Membranschadens in Form einer Rissbildung beim Kontakt mit dem Förderfluid diese chemische Reaktivität zum Verschließen des Risses ausführt. Diese ideale Eigenschaft des Mediums ist eine Fähigkeit zur Selbstheilung und vermeidet im Schadensfall der Membran ungeplante Anlagenstillstände und/oder eine Gefährdung für Mensch und Umwelt durch austretendes Förderfluid.

Idealerweise ist das Medium mittels einer Hydratation und/oder mittels einer Komplexbildung chemisch reaktiv. Dies ist von besonderem Vorteil bei flüssigen Förderfluiden, insbesondere wässrigen Lösungen, Emulsionen und Suspensionen. Die genannte Reaktionsart des Mediums verschließt Membranrisse wirkungsvoll und ermöglicht eine Fortführung des dynamischen Membranbetriebs.

In einer vorteilhaften Variante reagiert das Medium mittels Vernetzungsreaktion zur Heilung einer EPDM-basierten Membran im Falle einer Rissbildung. Dies führt zur schnellen Abdichtung des Risses und verhindert effektiv eine Unterbrechung des Betriebs.

Die erfindungsgemäße Volumenvergrößerung von zumindest einem Teil des eingeschlossenen Mediums führt zu einer Abdichtung eines Membranrisses und heilt einen plötzlich aufgetretenen Schadensfall der Membran.

Das Medium weist gemäß der Erfindung eine haftende und/oder verbindende Wirkung mit mindestens einem Membranmaterial auf, insbesondere mit dem Ethylen-Propylen-Dien-Kautschuk der Membranlagen. Das ermöglicht auf eine ideale Weise eine Abdichtung eines plötzlich aufgetretenen Membranrisses.

Vorteilhafterweise umfasst das Medium einen Thermoplast. Thermoplaste, auch Plastomere genannt, sind Kunststoffe, die sich in einem bestimmten Temperaturbereich verformen lassen. Dieser Vorgang ist reversibel, das heißt, er kann durch Abkühlung und Wiedererwärmung bis in den schmelzflüssigen Zustand oft wiederholt werden.

Erfindungsgemäß umfasst das Medium einen Superabsorber. Superabsorber werden Kunststoffe genannt, die in der Lage sind, ein Vielfaches ihres Eigengewichts an Flüssigkeiten aufzusaugen. Dies sind vor allem Wasser bzw. wässrige Lösungen. Bei der Aufnahme der Flüssigkeit quillt der Superabsorber auf und bildet ein Hydrogel. Diese Eigenschaft ist besonders vorteilhaft zum Abdichten von Membranrissen.

Vorzugsweise besteht das Medium aus einem Thermoplast-Elastomer-Kompositmaterial. Erfindungsgemäß wird eine quellbare Materialzusammensetzung bereitgestellt, die aus einer thermoplastischen Matrix besteht, die mindestens ein elastomeres Material als erste Dispersphase und mindestens einen Superabsorber als weitere Dispersphase enthält. Dieses Kompositmaterial ist sowohl durch seine ideale Zusammensetzung als auch durch die membranlagenähnliche Ausbildung prädestiniert einen Membranriss abzudichten.

In einer alternativen Variante der Erfindung kann das Medium ähnlich der in EP 1 616 906 A1 beschriebenen Materialzusammensetzung ausgeführt sein.

Die Viskosität des Mediums ist so gewählt, dass das Material in einen plötzlich aufgetretenen Riss ausreichend schnell zu fließen und diesen abzudichten vermag, ohne vom Förderfluid aus der Membran gespült zu werden.

Idealerweise ist das Medium zwischen zwei EPDM-Lagen der Membran angeordnet. Bei dieser erfindungsgemäßen Anordnung ist es denkbar, dass sowohl Risse bei der fluidzugewandten als auch bei der fluidabgewandten Seite der Membran abgedichtet werden können. Insbesondere für diese Anwendung eignet sich Formpressen (Compression Moulding) als Herstellungsvariante. Das Formpressen ist ein Herstellungsverfahren für leicht gewölbte oder flache Bauteile. Dabei können auch thermoplastische Kunststoffe bzw. Elastomere verarbeitet werden. Zu Beginn des Verfahrens wird eine Formmasse, die in diesem Fall mindestens zwei Elastomer-Lagen, eine Lage des Mediums und eine dazwischen angeordnete, einstückige Struktur aus Verstärkungselementen inklusive Membranschraube umfasst, in eine Kavität eingebracht, welche aufgeheizt wird. Anschließend wird die Kavität unter Einsatz eines Druckkolbens geschlossen. Durch den Druck erlangt die Formmasse die vom Werkzeug vorgegebene Form. Bei Elastomeren führt dies zum Schmelzen des Kunststoffs. Nach dem Abkühlen kann das fertige Teil aus dem Formwerkzeug entnommen und nach- bzw. weiterverarbeitet werden.

Idealerweise ist das Medium von einer Hülle zumindest teilweise umgeben und/oder vollständig umschlossen. Die Hülle wirkt als Schutzelement, so dass das Medium im Herstellungsverfahren der Membran, wie beispielsweise beim Formpressen, als auch im dynamisch belasteten Betrieb geschützt wird und erst bei einer Rissbildung seine chemische Reaktivität zur Abdichtung des Risses ausführt.

In einer weiteren Variante der Erfindung ist das Medium innerhalb einer EPDM-Lage der Membran angeordnet. In einer alternativen Variante der Erfindung ist das Medium in Form von Einschlüssen innerhalb einer EPDM-Lage der Membran angeordnet. Für beide Varianten eignet sich die Herstellung der Membran über das Spritzgieß-Verfahren. Das Spritzgießen (Injection-Moulding) ist ein Verfahren, bei dem mit einer Spritzgießmaschine der jeweilige Elastomer-Werkstoff, der mit Anteilen des Mediums versetzt ist, verflüssigt (plastifiziert) wird und in eine Form, dem Spritzgusswerkzeug unter Druck eingespritzt wird, in dem eine Struktur aus Verstärkungselementen bereits angeordnet ist. Alternativ können einzelne Anordnungen des Mediums und/oder eine Schicht des Mediums bereits im Werkzeug um das Verstärkungselement angeordnet sein. Weiterhin ist auch eine Membran mit Medium ohne Verstärkungselemente gemäß der Erfindung denkbar. Im Werkzeug geht der Elastomer-Werkstoff durch Abkühlung bzw. eine Vernetzungsreaktion wieder in den festen Zustand über. Nach dem Öffnen des Werkzeugs kann das Fertigteil, die Membran mit angeordnetem und/oder eingeschlossenem Medium, entnommen werden. Der Hohlraum, die Kavität, des Werkzeugs bestimmt dabei die Form und die Oberflächenstruktur des fertigen Teiles.

Bevorzugt ist das Medium als Schicht ausgeführt, die zwischen zwei EPDM-Lagen positioniert ist. Dadurch ist auf besonders vorteilhafte Weise sichergestellt, dass unabhängig vom Ort der Rissbildung eine Abdichtung des Risses ausgeführt werden kann. Erfindungsgemäß erstreckt sich die Schicht des Mediums über mehr als 70 % der Membranfläche, vorzugsweise mehr als 80 % der Membranfläche, insbesondere mehr als 90 % der Membranfläche.

Ein Bauteilversagen von Membranen kann in der Anwendung zu erheblichen Kosten führen. Neben der Werkstoffweiterentwicklung zur Erhöhung der Performance und der Ermittlung von Verschleißverhalten zur Ermöglichung einer vorrausschauenden Instandhaltung stellt die Selbstkompensierung von Schäden eine Optimierung der Membrannutzung dar. Eine selbstabdichtende Membran, die nach einem entstandenen Riss ihre strukturelle Unversehrtheit wieder selbst herstellt, ist ideal für einen Anlagenbetrieb, der frei ist von ungeplanten Stillständen.

Um die vorausschauende Instandhaltung überhaupt erst zu realisieren, ist auf mindestens einer der Lagen eine leitfähige Struktur zur Detektion von Membranzuständen angeordnet. Auf diese Weise lässt sich bequem feststellen, ob eine Selbstabdichtung eines Membranrisses stattgefunden hat und ein Austausch beim nächsten geplanten Anlagenstillstand in Erwägung gezogen werden sollte.

Eine solche leitfähige Struktur zur Detektion von Membranzuständen kann beispielsweise eine Tinte sein, die mit Kohlenstoffpartikel versetzt ist, wie in EP 3 415 759 A1 offenbart und/oder ein Datenerfassungsgerät inklusive Sensor wie in DE 10 2018 213 002 A1 beschrieben.

Das erfindungsgemäße Medium sowie die Anordnung des Mediums innerhalb der Membran dienen zur Abdichtung von Rissen bei dynamisch betriebenen Membranen.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine Schnittdarstellung eines Membranventils,
- Figur 2: eine teilgeschnittene Membran mit Medium zur Abdichtung von Rissen.

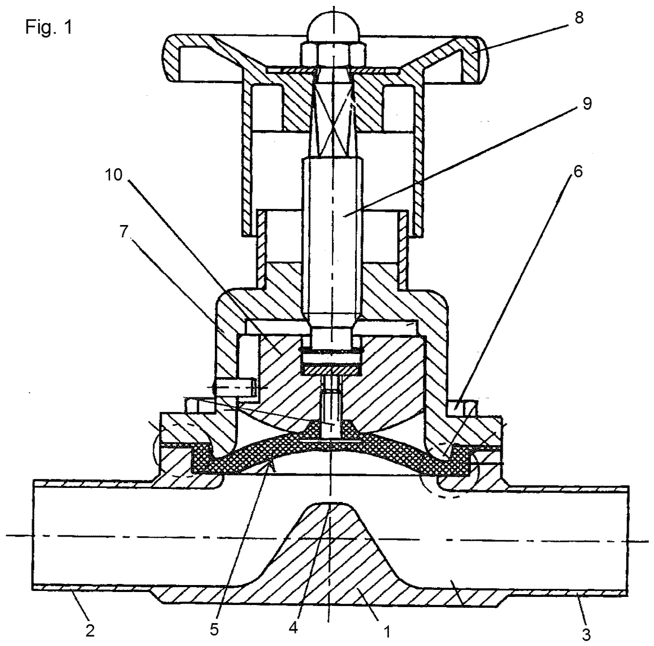

Das in Figur 1 dargestellte Membranventil besitzt ein Gehäuseunterteil 1, welches Anschlüsse 2, 3 und ein Wehr 4 umfasst. Das Wehr 4 dient als Sitzfläche für die Membran 5. Die Membran 5 ist mithilfe von Schrauben 6 eingespannt zwischen dem Gehäuseunterteil 1 und einem Gehäuseoberteil 7. Im Gehäuseoberteil 7 sind die zur Betätigung der Membran 5 notwendigen Elemente integriert, wie beispielsweise ein Antrieb 8, der im Ausführungsbeispiel als Handrad ausgeführt ist, sowie eine Spindel 9. An der Spindel 9 ist ein Druckstück 10 befestigt. Das Druckstück 10 ist verschieblich im Gehäuseoberteil 7 angeordnet und wird von einer inneren Wand des Gehäuseoberteils 7 geführt. Durch Betätigung des Antriebs 8 wird über die Spindel 9 eine vertikale Verschiebung des Druckstücks 10 bewirkt, sodass sich die Membran 5 verformt und der freie Querschnitt zwischen dem Wehr und der Membrananordnung vergrößert bzw. verkleinert werden kann.

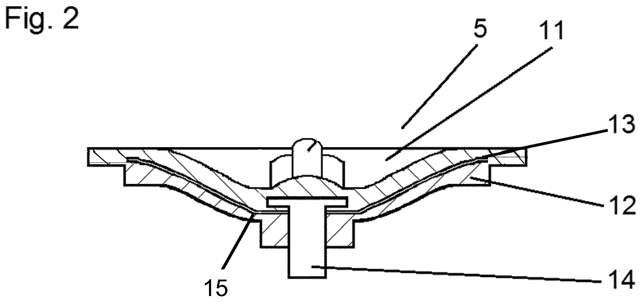

Figur 2 zeigt eine teilgeschnittene Membran 5 mit Medium 13 zum Abdichten von Rissen. Die Membran 5 umfasst eine erste Lage 11, die auf der Fluidseite angeordnet ist. Weiterhin umfasst die Membran 5 eine zweite Lage 12, welche die Rückseite der Membrananordnung bildet. Die beiden Lagen 11 und 12 sind aus einem Elastomer, insbesondere EPDM, gefertigt. Zwischen den beiden EPDM-Lagen 11, 12 ist das Medium 13, welches von einer Hülle 15 umgeben ist, angeordnet. Weiterhin umfasst die Membran 5 ein stiftartiges Element 14, das im Ausführungsbeispiel als Membranschraube ausgebildet ist.

Das in Figur 2 dargestellte stiftartige Element 14 kann ein Gewinde aufweisen. Gemäß der Darstellung in Figur 1 ist das stiftartige Element 14 als Membranschraube ausgebildet und weist ein Außengewinde auf, das in ein Innengewinde eingeschraubt wird, welches in einem Druckstück 10 ausgebildet ist.

Bei der Membran 5 gemäß der Darstellung in Figur 2 handelt es sich um ein Compound aus zwei EPDM-Lagen 11, 12 und einem dazwischen angeordneten Medium 13 zur Abdichtung von Rissen, die durch Vulkanisation miteinander verbunden sind. Bei einem plötzlich aufgetretenen Riss der Membran 5 während des Betreibens, tritt das Medium 13 aus und/oder quilt das Medium 13 in der Art auf, dass mittels einer erfindungsgemäßen Vernetzungsreaktion der Riss abgedichtet und die Membran 5 im Anlagenbetrieb weiterhin dynamisch belastet werden kann.

## Patentansprüche

1. Membranventil mit einem Gehäuseunterteil (1), einem Gehäuseoberteil (7), Anschlüssen (2,3), einem Wehr (4) und einer Membran (5), die Räume voneinander dichtend trennt und die Membran (5) mithilfe von Schrauben (6) zwischen dem Gehäuseunterteil (1) und dem Gehäuseoberteil (7) des Membranventils eingespannt ist, **dadurch gekennzeichnet, dass** innerhalb der Membran (5) ein chemisch reaktives Medium (13) zur Abdichtung von Rissen eingeschlossen ist, wobei das Medium (13) erst beim Auftreten eines Membranschadens in Form eines Membranrisses beim Kontakt mit einem Förderfluid eine chemische Reaktivität zum Verschließen des Membranrisses ausführt.

2. Membranventil nach Anspruch 1, **dadurch gekennzeichnet, dass** das Medium (13) in einer Hydratation und/oder in einer Komplexbildung chemisch reaktiv ist.

3. Membranventil nach einem der Ansprüche 1 bis 2, **dadurch gekennzeichnet, dass** das Medium (13) eine haftende und/oder verbindende Wirkung mit mindestens einem Membranmaterial aufweist.

4. Membranventil nach einem der Ansprüche 1 bis 3, **dadurch gekennzeichnet, dass** das Medium (13) einen Thermoplast umfasst.

5. Membranventil nach einem der Ansprüche 1 bis 4, **dadurch gekennzeichnet, dass** das Medium (13) einen Superabsorber umfasst.

6. Membranventil nach einem der Ansprüche 1 bis 5, **dadurch gekennzeichnet, dass** das Medium (13) ein Thermoplast-Elastomer-Kompositmaterial ist.

7. Membranventil nach einem der Ansprüche 1 bis 6, **dadurch gekennzeichnet, dass** das Medium (13) zwischen zwei Lagen (11,12) der Membran (5) angeordnet ist.

8. Membranventil nach einem der Ansprüche 1 bis 6, **dadurch gekennzeichnet, dass** das Medium (13) innerhalb einer Lage (11, 12) der Membran (5) angeordnet ist.

9. Membranventil nach einem der Ansprüche 1 bis 6, 8 **dadurch gekennzeichnet, dass** das Medium (13) in Form von Einschlüssen innerhalb einer Lage (11, 12) der Membran (5) angeordnet ist.

10. Membrananordnung nach einem der Ansprüche 1 bis 9, **dadurch gekennzeichnet, dass** das Medium (13) als Schicht ausgeführt ist.

11. Membranventil nach Anspruch 10, **dadurch gekennzeichnet, dass** sich die Schicht über mehr als 70 % der Membranfläche, vorzugsweise mehr als 80 % der Membranfläche, insbesondere mehr als 90 % der Membranfläche erstreckt.

12. Membranventil nach einem der Ansprüche 1 bis 11, **dadurch gekennzeichnet, dass** das Medium (13) von einer Hülle (15) zumindest teilweise umgeben ist, insbesondere vollständig umschlossen ist.

13. Membranventil nach Anspruch 7, **dadurch gekennzeichnet, dass** mindestens eine der Lagen (11, 12) eine leitfähige Struktur zur Detektion von Membranzuständen aufweist.

## Claims

1. Diaphragm valve with a lower housing part (1), an upper housing part (7), connections (2, 3), a weir (4), and a diaphragm (5) that separates chambers from each other in a sealed manner and the diaphragm (5) is held in place by means of screws (6) between the lower housing part (1) and the upper housing part (7) of the diaphragm valve, **characterized in that** a chemically reactive medium (13) is enclosed in the diaphragm (5) to seal tears, wherein the medium (13) is only becoming chemically reactive upon the occurrence of diaphragm damage in the form of a diaphragm tear upon contact with a pumped fluid thereby closing the diaphragm tear.

2. Diaphragm valve according to claim 1, **characterized in that** the medium (13) is chemically reactive in hydration and/or complex formation.

3. Diaphragm valve according to one of claims 1 to 2, **characterized in that** the medium (13) has an adhesive and/or bonding effect with at least one diaphragm material.

4. Diaphragm valve according to one of claims 1 to 3, **characterized in that** the medium (13) comprises a thermoplastic.

5. Diaphragm valve according to one of claims 1 to 4, **characterized in that** the medium (13) comprises a superabsorbent.

6. Diaphragm valve according to any one of claims 1 to 5, **characterized in that** the medium (13) is a thermoplastic elastomer composite material.

7. Diaphragm valve according to one of claims 1 to 6, **characterized in that** the medium (13) is arranged between two layers (11, 12) of the diaphragm (5).

8. Diaphragm valve according to one of claims 1 to 6, **characterized in that** the medium (13) is arranged within a layer (11, 12) of the diaphragm (5).

9. Diaphragm valve according to one of claims 1 to 6,8 **characterized in that** the medium (13) is arranged in the form of inclusions within a layer (11, 12) of the diaphragm (5).

10. Diaphragm arrangement according to one of claims 1 to 9, **characterized in that** the medium (13) is designed as a layer.

11. Diaphragm valve according to claim 10, **characterized in that** the layer covers more than 70% of the diaphragm area, preferably more than 80% of the diaphragm area, in particular more than 90% of the diaphragm area.

12. Diaphragm valve according to any one of claims 1 to 11, **characterized in that** the medium (13) is at least partially surrounded by a sheath (15), in particular completely enclosed.

13. Diaphragm valve according to claim 7, **characterized in that** at least one of the layers (11, 12) has a conductive structure for detecting diaphragm states.

## Revendications

1. Vanne à membrane comprenant une partie inférieure de boîtier (1), une partie supérieure de boîtier (7), des raccords (2, 3), un déversoir (4) et une membrane (5) qui sépare les chambres les unes des autres de manière étanche, la membrane (5) étant maintenue en place au moyen de vis (6) entre la partie inférieure de boîtier (1) et la partie supérieure (7) du boîtier de la vanne à membrane, **caractérisée en ce qu'**un milieu chimiquement réactif (13) est enfermé dans la membrane (5) pour colmater les déchirures, le milieu (13) ne devenant chimiquement réactif qu'en cas de dommage de la membrane sous la forme d'une déchirure de la membrane au contact d'un fluide pompé, fermant ainsi la déchirure de la membrane.

2. Vanne à membrane selon la revendication 1, **caractérisée en ce que** le milieu (13) est chimiquement réactif dans l'hydratation et/ou dans la formation de complexes.

3. Vanne à membrane selon l'une des revendications 1 à 2, **caractérisée en ce que** le milieu (13) a un effet adhésif et/ou liant avec au moins un matériau de membrane.

4. Vanne à membrane selon l'une des revendications 1 à 3, **caractérisée en ce que** le milieu (13) comprend un thermoplastique.

5. Vanne à membrane selon l'une des revendications 1 à 4, **caractérisée en ce que** le milieu (13) comprend un superabsorbant.

6. Vanne à membrane selon l'une des revendications 1 à 5, **caractérisée en ce que** le milieu (13) est un matériau composite élastomère thermoplastique.

7. Vanne à membrane selon l'une des revendications 1 à 6, **caractérisée en ce que** le milieu (13) est disposé entre deux couches (11, 12) de la membrane (5).

8. Vanne à membrane selon l'une des revendications 1 à 6, **caractérisée en ce que** le milieu (13) est disposé à l'intérieur d'une couche (11, 12) de la membrane (5).

9. Vanne à membrane selon l'une des revendications 1 à 6,8, **caractérisée en ce que** le milieu (13) est disposé sous forme d'inclusions à l'intérieur d'une couche (11, 12) de la membrane (5).

10. Dispositif à membrane selon l'une des revendications 1 à 9, **caractérisé en ce que** le milieu (13) est conçu sous forme de couche.

11. Vanne à membrane selon la revendication 10, **caractérisée en ce que** la couche recouvre plus de 70 % de la surface de la membrane, de préférence plus de 80 % de la surface de la membrane, en particulier plus de 90 % de la surface de la membrane.

12. Vanne à membrane selon l'une des revendications 1 à 11, **caractérisée en ce que** le milieu (13) est au moins partiellement entouré par une gaine (15), en particulier complètement enfermé.

13. Vanne à membrane selon la revendication 7, **caractérisée en ce qu'**au moins l'une des couches (11, 12) présente une structure conductrice pour détecter les états de la membrane.
